# EUROPÄISCHE PATENTSCHRIFT

(11) **EP 1 396 219 B1**
(45) Veröffentlichungstag und Bekanntmachung des Hinweises auf die Patenterteilung: **17.01.2007**
(21) Anmeldenummer: 03020354.1
(22) Anmeldetag: 09.09.2003
(51) Int. Cl.: A47J 37/06

(54) **Grillgerät vom Raclette-Typ**
Grilling device of the raclette type
Gril du type raclette

(30) Priorität: 09.09.2002 DE 10241685
(43) Veröffentlichungstag der Anmeldung: 10.03.2004
(73) Patentinhaber: BSH Bosch und Siemens Hausgeräte GmbH, 81739 München (DE)
(72) Erfinder: Bennewitz, Niklas, 70191 Stuttgart (DE)

(56) Entgegenhaltungen:
- DE-A- 4 326 064
- DE-U- 20 206 236

## Beschreibung

Die Erfindung betrifft ein Grillgerät nach dem Oberbegriff des Anspruchs 1 sowie eine ein solches Grillgerät umfassende Grillanordnung.

Derartige Grillgeräte sind seit längerem bekannt und werden in den Industrieländern in zahlreichen Haushalten eingesetzt. Da sie die gleichzeitige Zubereitung verschiedenartiger gegrillter Speisen direkt am Ort des Verzehrs erlauben, haben sie große Beliebtheit insbesondere für kleinere Festlichkeiten erlangt.

Es sind zahlreiche verschiedene konstruktive Ausführungen von Raclette-Grills bekannt. Bei einem Teil dieser Geräte wird die Grillplatte mittels gesonderter Halter oder auf eine an der Grundplatte angebrachte Halterung lose aufgesetzt, damit die Teile leicht gereinigt werden können.

Aus der DE 27 01 502 A1 ist ein Grillgerät der in Rede stehenden Art bekannt, bei dem ein Unterteil (Grundplatte) mit einer Aufstellfläche für Tiegel (Grillgutschalen) Träger aufweist, deren Oberkante unmittelbar als Stützfläche für eine großflächige, oberhalb eines Heizelementes liegende Grillgutschale ausgebildet ist (die im vorliegenden Kontext der Heizplatte entspricht). Bevorzugt sind diese Träger als lösbar an der Grundplatte befestigte Abstandshalter ausgebildet, so dass das Grillgerät in eine Mehrzahl von Teilen demontierbar ist.

Aus der DE 43 26 064 C2 ist ein weiteres Grillgerät dieser Art bekannt, bei dem zwei Grill-und Kochetagen durch zwei mit Abstand übereinanderliegende Platten gebildet sind, zwischen denen ein Heizwiderstand angeordnet ist, wobei auch hier die obere Platte abnehmbar ist. Sie ist auf einem Träger gehalten, der selbst abnehmbar am Gerätegehäuse angebracht ist und aus einem Draht besteht.

Aus der DE 196 38 862 A1 ist ein weiteres, hier als Racletteofen mit Grillplatte bezeichnetes, Grillgerät der hier in Rede stehenden Art bekannt, das aus einzelnen Elementen zusammengesetzt ist, welche sich (mit Ausnahme des Heizelementes) in einer Geschirrspülmaschine reinigen lassen. Träger zum Halten der Grillplatte bzw. Heizplatte sind hier als Eckstützen ausgebildet und tragen zugleich eine, hier als Pfännchenauflage bezeichnete, Grundplatte.

Aus der DE 202 06 236 U 1 ist eine Grillvorrichtung mit einer Abstandsanpassungsvorrichtung bekannt. Die Grillvorrichtung umfasst eine untere Grilleinheit mit einem unteren Heizglied und einen Rahmen, der im rückwärtigen Bereich der unteren Grilleinheit um eine Schwenkachse derart drehbar ist, dass er hin zu der unteren Grilleinheit oder von dieser hinweg schwenkbar ist. Der Rahmen weist zwei im Wesentlichen zueinander parallele Seitenarme auf, die zwischen sich einen Aufnahmebereich definieren. Die Grillvorrichtung umfasst ferner eine obere Grilleinheit mit einem oberen Heizglied, die in den Aufnahmebereich angeordnet und über ein Paar sich parallel zur Schwenkachse erstreckende erste Schwenklage an den seitlichen Armen des Rahmens schwenkbar gelagert ist. Das obere Heizglied wirkt mit dem untern Heizglied zusammen, um einen Bratraum dazwischen zu definieren. Die Grilleinheit umfasst außerdem eine Abstandsanpassungsvorrichtung, umfassend zumindest ein Paar von über ein viertes Schwenklager gelenkig miteinander verbundene Verbindungselemente, von denen das erste Verbindungselement über ein zweites Schwenklager mit der oberen Grilleinheit frontseitig zu den ersten Schwenklagern verbunden ist. Die Drehachse des zweiten Schwenklagers, welche vorzugsweise parallel zur Drehachse verläuft, ist von den ersten Schwenklagern festgelegt. Das zweite Verbindungselement ist an einem der seitlichen Arme über dem dritten Schwenklager, die sich parallel zu den ersten Schwenklagern erstrecken, gelenkig befestigt. Die Grillvorrichtung umfasst des Weiteren eine Positioniervorrichtung zum Positionieren der seitlichen Arme des Rahmens relativ zu der unteren Grilleinheit.

All diesen Lösungen gemeinsam ist, dass sie bei Nichtgebrauch den gleichen hohen Raumbedarf wie im Gebrauchszustand haben und daher bei beengten Platzverhältnissen, also insbesondere in Kleinhaushalten, nur schwer unterzubringen sind.

Der Erfindung liegt daher die Aufgabe der Bereitstellung eines verbesserten Grillgerätes dieser Art zugrunde, welches - bevorzugt zusammen mit den Grillgutschälchen bzw. - pfännchen-platzsparend aufbewahrt werden kann.

Diese Aufgabe wird durch ein Grillgerät mit den Merkmalen des Anspruchs 1 gelöst.

Die Erfindung schließt den wesentlichen Gedanken ein, zur leichteren Aufbewahrung des Grillgerätes eine Abstandsverringerung zwischen der Grundplatte und der Heiz- bzw. Grillplatte vorzusehen. Sie schließt weiter den Gedanken ein, hierzu schwenkbare Verbindungselemente vorzusehen, die derart ausgebildet und angebracht sind, dass durch ihr Verschwenken die beabsichtigte Abstandsverringerung bewirkt und dadurch ein Aufbewahrungszustand mit verringerter Gesamthöhe erreicht wird. Ein Raclette-Grillgerät hat, da die Einhaltung eines gewissen Abstandes der die Grillgutschälchen tragenden Grundplatte von der Tischfläche im Hinblick auf die relativ hohe Temperatur der Grundplatte wünschenswert ist, normalerweise einen zusätzlichen Gerätefuß. Gemäß der Erfindung ist dieser ebenfalls mit den schwenkbaren Verbindungselementen derart verbunden, dass beim Zusammenlegen des Grillgerätes auch eine Abstandsverringerung zwischen Fuß und Grundplatte bewirkt wird. Mit der vorgeschlagenen Lösung wird also sowohl eine Abstandsverringerung zwischen Grundplatte und Heiz- bzw. Grillplatte als auch zwischen Gerätefuß und Grundplatte und somit in gewissem Sinne eine zweifache Höhenverringerung und Einsparung von Aufbewahrungsraum bewirkt.

Eine erste bevorzugte Ausführung zeichnet sich aus durch mindestens drei band- oder stabförmige Verbindungselemente, die jeweils an einem ersten Ende mit einem ersten Gelenkpunkt an der Heizplatte und an einem zweiten Ende oder in einem Mittenabschnitt mit einem zweiten Gelenkpunkt an der Grundplatte verbunden sind. In einer weiter bevorzugten Ausführung sind die Grundplatte und Heizplatte und optional der Fuß in der Draufsicht im wesentlichen kreisförmig oder elliptisch und die Verbindungselemente am Umfang angebracht. In ihrer Grundform kreisförmige oder elliptische Raclette-Grillgeräte genießen schon deshalb eine hohe Nutzerakzeptanz, weil sie sich aufgrund ihrer leichten Zugänglichkeit von allen Seiten besonders gut für den Einsatz bei kleinen Festlichkeiten eignen. Im Kontext der vorliegenden Erfindung bieten sie den zusätzlichen Vorteil, dass die Verbindungselemente besonders einfach ausgeführt und angebracht werden können.

Zur Erleichterung der Handhabung haben die Verbindungselemente eine Federcharakteristik derart, dass sie die Heizplatte gegenüber der Grundplatte und wahlweise dem Fuß elastisch vorspannen und die Überführung des Grillgerätes aus dem Aufbewahrungszustand in den Gebrauchszustand mittels ihrer Federkraft unterstützen. Insbesondere sind sie hierzu als Blattfederelemente ausgebildet. Sie sind im offenen Zustand (Gebrauchszustand) des Grillgerätes über ihre Breitseite gegeneinander verschränkt und können so leicht das Gewicht der Grillplatte und des darauf befindlichen Grillgutes (z.B. Kartoffeln) tragen. Sie heben beim Öffnen die Grill- bzw. Heizplatte von selbst ein Stück an, so dass das vollständige Öffnen dann jedem Nutzer leicht durch ein geringfügiges Drehen an der Grillplatte gelingt.

Eine besonders platzsparende Aufbewahrung des vorgeschlagenen Grillgerätes wird durch eine Wandaufhängung möglich, und das Gerät weist daher bevorzugt eine entsprechende Aufhängeeinrichtung (etwa eine geeignet geformte Ausnehmung an der Unterseite des Fußes) auf. Insbesondere (aber nicht nur) für diese Ausführung ist das Vorsehen von Rastmitteln zum Arretieren der Grundplatte gegenüber der Heizplatte und wahlweise dem Fuß in mindestens einer vorbestimmten Stellung, insbesondere dem Aufbewahrungszustand, von Vorteil. Diese Rastmittel verhindern ein "Auseinanderfallen" des Grillgerätes im aufgehängten Zustand oder bei Ortsveränderungen und damit auch ein Herausfallen der im Inneren abgestellten Grillgutschälchen. Sofern die Verbindungselemente nicht ohne weiteres selbstarretierend ausgebildet sind, ist des weiteren das Vorsehen von Rastmitteln zur Arretierung der Grundplatte gegenüber der Heizplatte und wahlweise dem Fuß sowohl im Aufbewahrungszustand als auch im Gebrauchszustand zweckmäßig.

Eine weitere Verbesserung der Raumökonomie im Aufbewahrungszustand ergibt sich bei einer Fortbildung der vorgeschlagenen Lösung mit Grillgutschälchen, die klappbare oder schwenkbare Griffe aufweisen.

Vorteile und Zweckmäßigkeiten der Erfindung ergeben sich im übrigen aus den abhängigen Ansprüchen sowie der nachfolgenden kurzen Beschreibung eines bevorzugten Ausführungsbeispiels anhand der Figuren. Von diesen zeigen:
- Fig. 1: ein Ausführungsbeispiel eines erfindungsgemäßen Grillgerätes im Gebrauchszustand, zusammen mit einem Grillgutschälchen;
- Fig. 2: eine Darstellung dieses Gerätes im Aufbewahrungszustand; und
- Fig. 3: eine der Fig. 1 entsprechende Ansicht.

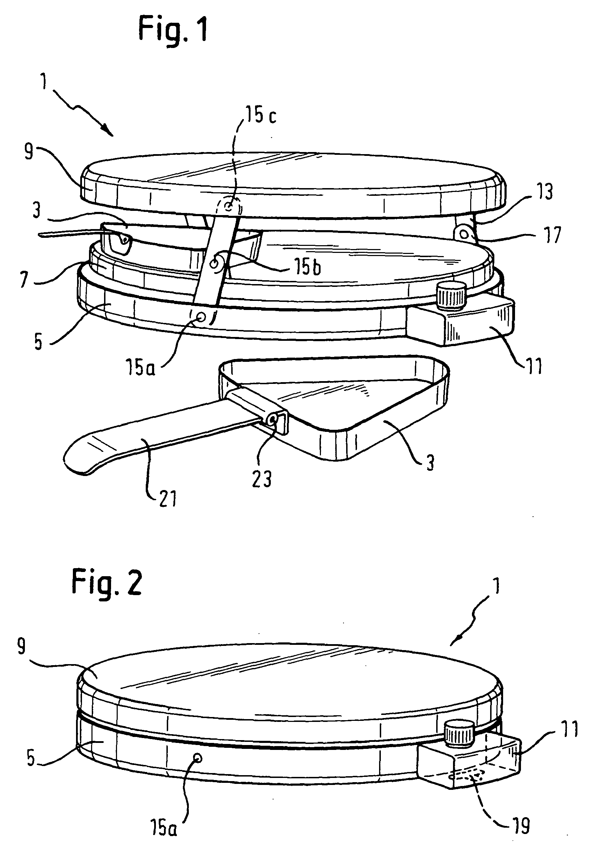

Fig. 1 und 2 zeigen in perspektivischen, schematischen Darstellungen ein Grillgerät 1 im Gebrauchszustand (geöffneten Zustand - Fig. 1) bzw. Aufbewahrungszustand (geschlossenen Zustand - Fig. 2). In Fig. 1 ist zudem ein zum Gebrauch mit diesem Grillgerät geeignetes Grillgutschälchen 3 gezeigt.

Das Grillgerät 1 umfasst als Hauptteile einen kreis- oder kreisringförmigen Fuß 5, eine mit ihrer Oberfläche eine Stellfläche für eine Mehrzahl von Grillgutschälchen 3 bildende Grundplatte 7 und eine das Grillgerät 1 nach oben abschließende Heiz- bzw. Grillplatte 9. Seitlich am Fuß 5 ist ein Stromanschluss- und Bedienteil 11 angebracht.

Der Fuß 5, die Grundplatte 7 und die Heiz- bzw. Grillplatte 9 sind in der Draufsicht jeweils kreisförmig ausgeführt und haben im Gebrauchszustand alle einen vorbestimmten Abstand voneinander. Sie sind durch drei Verbindungs- und Tragbänder 13, die in Winkelabständen von 120° an ihren Außenumfängen angeordnet sind, miteinander verbunden. Die Verbindungs- und Tragbänder 13 sind über je einen Gelenkpunkt 15a bis 15c mit jedem der Elemente Fuß 5, Grundplatte 7 und Heiz- bzw. Grillplatte 9 verschwenkbar verbunden. Die Verbindung mit der Grundplatte 7 erfolgt indirekt durch eine zusätzliche Verbindungslasche 17.

Aufgrund einer inhärenten Blattfedercharakteristik spannen die Verbindungs- und Tragbänder 13 die Heiz- bzw. Grillplatte 9 elastisch gegen den Fuß 5 vor und unterstützen somit ein Öffnen aus dem in Fig. 2 gezeigten Aufbewahrungszustand in den in Fig. 1 gezeigten Gebrauchszustand. Umgekehrt erfolgt das Schließen in den Aufbewahrungszustand entgegen der Federkraft, was indes nur einen geringen Kraftaufwand seitens des Nutzers erfordert. Mindestens der geschlossene Zustand ist durch einen (in der Figur nicht dargestellten) Verschluss bzw. eine Rasteinrichtung gesichert, so dass vor der Überführung in den Gebrauchszustand ein Lösen desselben erforderlich ist. Wie in den Figuren lediglich symbolisch dargestellt, befindet sich an der Unterseite des Stromanschluss- und Bedienteiles 11 (oder alternativ des Fußes 5) eine Aufhängeöse 19 zur Wandaufhängung des Grillgerätes im Aufbewahrungszustand.

Wie in Fig. 1 zu erkennen ist, haben die Grillgutschälchen 3 einen Handgriff 21 mit einem (arretierbaren) Klappmechanismus 23. Durch ein Umklappen der Handgriffe wird wahlweise eine Aufbewahrung des Grillgerätes im geschlossenen Zustand mit weiter verringertem seitlichem Platzbedarf möglich.

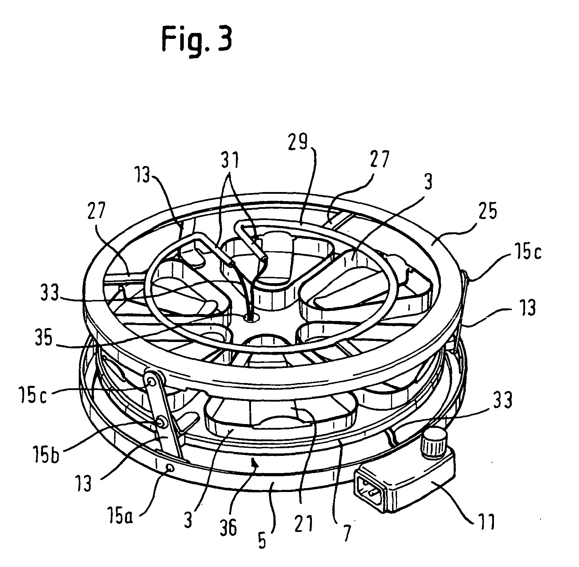

Die perspektivischen Ansicht aus der Fig. 3 entspricht der Darstellung aus der Fig. 1. Demgemäß ist die Heizplatte 9 von dem Grillgerät 1 abgenommen dargestellt. Die drei Verbindungselemente 13 sind an ihren oberen Gelenkpunkten 15c mit einem Auflagering 25 gelenkig verbunden. Auf dem Auflagering 25 kann die Heizplatte 9 gesetzt werden. Am Innenumfang des Stützringes 25 sind drei radial nach innen gerichtete Stege 27 ausgebildet. An diesen ist ein nahezu kreisrunder Rohrheizkörper 29 aufgehängt. Der Rohrheizkörper 29 weist zwei benachbarte, radial nach innen gerichtete Anschlussenden 31 auf. Diese sind mit einem Stromversorgungskabel 33 verbunden. Das Stromversorgungskabel 33 verläuft in axialer Richtung in etwa mittig von den Anschlussenden 31 durch eine in der Grundplatte 7 ausgebildete Durchführungsöffnung 35. Von dort wird es über einen Zwischenraum 36 unterhalb der Grundplatte 7 weitergeführt bis zu dem Bedienteil 11. Das Bedienteil 11 ist am Außenumfang des Gerätefu-ßes 5 befestigt. Wird das Grillgerät von dem in der Figur 2 gezeigten Aufbewahrungszustand in den in Gebrauchszustand der Figuren 1 oder 3 verstellt, so verbleibt die Lage des Bedienteiles 11 unverändert. Die Länge des Stromversorgungskabel 33 ist hierbei derart bemessen, dass es die Abstandsänderung zwischen dem Bedienteil 11 und der Heizplatte 9 aufnimmt.

Aus der Fig. 3 ist weiter ersichtlich, dass die Grillgutschälchen 3 mit eingeklappten Griffen auf einer ringförmige Abstellfläche der Grundplatte 7 angeordnet sind. Innerhalb der ringförmigen Abstellfläche der Grundplatte 7 ist ein mittiger freier Flächenabschnitt erkennbar, in dem die Durchführungsöffnung 35 angeordnet ist. Damit ist die Handhabung des Grillgerätes bzw. der Grillgutschälchen 3 nicht durch das Stromführungskabel 33 beeinträchtigt.

Die Ausführung der Erfindung ist nicht auf das hier beschriebene Beispiel beschränkt, sondern ebenso in einer Vielzahl von Abwandlungen möglich, die im Rahmen fachgemäßen Handelns liegen.

## Patentansprüche

1. Grillgerät (1) vom Raclette-Typ mit einer Grundplatte (7) zum Abstellen von Grillgutschälchen (3) und einer in einem Gebrauchszustand beabstandet von der Grundplatte (7) angeordneten Heizplatte (9), die über zumindest ein höhenverstellbares Verbindungselement (13) mit der Grundplatte (7) derart verbunden ist, dass durch ein Verstellen des Verbindungselements (13) das Grillgerät (1) in einen Aufbewahrungszustand überführt ist, in dem ein Abstand zwischen der Grund- und Heizplatte (7, 9) verringert ist, **dadurch gekennzeichnet, dass** unterhalb der Grundplatte (7) ein Gerätefuß (5) ausgebildet ist, der mit dem Verbindungselement (13) verbunden ist, und dessen Abstand zur Grundplatte (7) sich beim Verstellen des Verbindungselements (13) ändert.

2. Grillgerät nach Anspruch 1, **dadurch gekennzeichnet, dass** das Verbindungselement (13) als ein Schwenkhebel ausgebildet ist, bei dessen Schwenken sich der Abstand zwischen der Grund- und Heizplatte (7, 9) ändert.

3. Grillgerät nach Anspruch 1 oder 2, **dadurch gekennzeichnet, dass** das Verbindungselement (13) an einem ersten Ende mit einem ersten Gelenkpunkt (15c) an der Heizplatte (9) und an einem zweiten Ende oder in einem Mittenabschnitt mit einem zweiten Gelenkpunkt (15b) an der Grundplatte (7) verbunden ist.

4. Grillgerät nach einem der vorhergehenden Ansprüche, **dadurch gekennzeichnet, dass** die Grundplatte (7) und Heizplatte (9) und optional der Gerätefuß (5) in der Draufsicht insbesondere im wesentlichen kreisförmig oder elliptisch sind, und dass das Verbindungselement (13) an deren Außenumfang angeordnet ist.

5. Grillgerät nach einem der vorhergehenden Ansprüche, **dadurch gekennzeichnet, dass** das Verbindungselement (13) eine Federcharakteristik aufweist, mittels der das Verbindungselement (13) eine Federkraft auf die Heizplatte (9), die Grundplatte (7) und/oder den Gerätefuß (5) ausübt, die eine Überführung des Grillgerätes (1) vom Aufbewahrungszustand in den Gebrauchszustand unterstützt.

6. Grillgerät nach Anspruch 5, **dadurch gekennzeichnet, dass** das Verbindungselement (13) als Blattfederelement ausgebildet ist.

7. Grillgerät nach einem der vorhergehenden Ansprüche, **dadurch gekennzeichnet, dass** am Grillgerät eine Aufhängeeinrichtung (19) zur Wandaufhängung ausgebildet ist.

8. Grillgerät nach einem der vorhergehenden Ansprüche, **dadurch gekennzeichnet, dass** dem Verbindungselement (13) Rastmittel zum Arretieren der Grundplatte (7) gegenüber der Heizplatte (9) und wahlweise dem Gerätefuß (5) in mindestens einer vorbestimmten Stellung, insbesondere dem Aufbewahrungszustand, zugeordnet ist.

9. Grillgerät nach einem der vorangehenden Ansprüche, **dadurch gekennzeichnet, dass** zur Betätigung der Heizplatte (9) ein Bedienteil (11) am Grillgerät, insbesondere an dessen Gerätefuß (5) ausgebildet ist, und dass die Lage des Bedienteiles (11) bei einer Abstandsänderung zwischen der Grund- und Heizplatte (7, 9) ortsfest verbleibt.

10. Grillgerät nach Anspruch 9, **dadurch gekennzeichnet, dass** das ortsfest verbleibende Bedienteil (11) über ein Stromversorgungskabel (33) mit der Heizplatte (9) verbunden ist, und dass das Stromversorgungskabel (33) eine Abstandsänderung zwischen dem Bedienteil (11) und der Heizplatte (9) aufnimmt, die beim Verstellen zwischen dem Gebrauchszustand und dem Aufbewahrungszustand erfolgt.

11. Grillgerät nach Anspruch 10, **dadurch gekennzeichnet, dass** das Stromversorgungskabel (33) innerhalb des Grillgerätes verläuft.

12. Grillgerät nach einem der Ansprüche 10 oder 11, **dadurch gekennzeichnet, dass** in der Grundplatte (7) eine Durchführungsöffnung (35) ausgebildet ist, durch die das Stromversorgungskabel (33) von der Heizplatte (9) in einen Zwischenraum (36) unterhalb der Grundplatte (5) bis zu dem Bedienteil (11) geführt ist.

13. Grillgerät nach Anspruch 12, **dadurch gekennzeichnet, dass** die Durchführungsöffnung (35) außerhalb einer Abstellfläche zum Abstellen der Grillgutschälchen (3) in der Grundplatte ausgebildet ist.

14. Grillanordnung mit einem Grillgerät (1) nach einem der vorangehenden Ansprüche und einer Mehrzahl von Grillgutschälchen (3), welche klappbare (23) oder schwenkbare und mindestens in einem Klapp- bzw. Schwenkzustand verrastbare Griffe (21) aufweisen.

## Claims

1. Grilling appliance (1) of raclette type with a base plate (7) for the deposit of grilling stock trays (3) and a heating plate (9), which in a use state is arranged at a spacing from the base plate (7) and which is connected by way of a height-adjustable connecting element (13) with the base plate (7) in such a manner that through an adjustment of the connecting element (13) the grilling appliance (1) is transferred to a storage state in which a spacing between the base plate (7) and heating plate (9) is reduced, **characterised in that** formed below the base plate (7) is an appliance foot (5) which is connected with the connecting element (13) and the spacing of which from the base plate (7) changes on adjustment of the connecting element (13).

2. Grilling appliance according to claim 1, **characterised in that** the connecting element (13) is constructed as a pivot lever, on pivotation of which the spacing between the base plate (7) and heating plate (9) changes.

3. Grilling appliance according to claim 1 or 2, **characterised in that** the connecting element (13) is connected at a first end with a first pivot point (15c) at the heating plate (9) and at a second end or in a middle section with a second pivot point (15b) at the base plate (7).

4. Grilling appliance according to one of the preceding claims, **characterised in that** the base plate (7) and heating plate (9) and optionally the appliance foot (5) are, in particular, substantially circular or elliptical in plan view and that the connecting element (13) is arranged at the outer circumference thereof.

5. Grilling appliance according to one of the preceding claims, **characterised in that** the connecting element (13) has a spring characteristic, by means of which the connecting element (13) exerts a spring force on the heating plate (9), the base plate (7) and/or the appliance foot (5), which assists transfer of the grilling appliance (1) from the storage state to the use state.

6. Grilling appliance according to claim 5, **characterised in that** the connecting element (13) is constructed as a leaf spring element.

7. Grilling appliance according to one of the preceding claims, **characterised in that** a suspension device (19) for suspension on the wall is formed at the grilling appliance.

8. Grilling appliance according to one of the preceding claims, **characterised in that** the connecting element (13) is associated with detent means for locking the base plate (7) relative to the heating plate (9) and selectably to the appliance foot (5) in at least one predetermined setting, particularly the storage setting.

9. Grilling appliance according to one of the preceding claims, **characterised in that** for actuation of the heating plate (9) an operating part (11) is formed at the grilling appliance, particularly at the appliance foot (5) thereof, and that the position of the operating part (11) remains stationary in the case of a change in spacing between the base plate (7) and heating plate (9).

10. Grilling appliance according to claim 9, **characterised in that** the operating part (11) remaining stationary is connected by way of a current supply cable (33) with the heating plate (9) and that the current supply cable (33) accepts a spacing change between the operating part (11) and the heating plate (9) which takes place on adjustment between the use state and the storage state.

11. Grilling appliance according to claim 10, **characterised in that** the current supply cable (33) extends within the grilling appliance.

12. Grilling appliance according to one of clams 10 and 11, **characterised in that** formed in the base plate (7) is a passage opening (35) through which the current supply cable (33) is led from the heating plate (9) in an intermediate space (36) below the base plate (5) up to the operating part (11).

13. Grilling appliance according to claim 12, **characterised in that** the passage opening (35) is formed outside a deposit surface for deposit of the grilling stock trays (3) in the base plate.

14. Grilling arrangement with a grilling appliance (1) according to one of the preceding claims and a plurality of grilling stock trays (3), which have foldable (23) or pivotable handles (21) able to be detented at least in a folded or pivoted state.

## Revendications

1. Gril (1) du type raclette comprenant une plaque de base (7) pour poser des coupelles pour produit à griller (3) et une plaque chauffante (9) disposée, lors de l'utilisation, à distance de la plaque de base (7), qui est relié par au moins un élément de liaison (13) réglable en hauteur à la plaque de base (7), de manière telle que par un déplacement de l'élément de liaison (13) le gril (1) est transféré dans un état de stockage dans lequel un écartement entre la plaque de base et la plaque chauffante (7,9) est réduit, **caractérisé en ce que** en dessous de la plaque de base (7) est conçu un pied d'appareil qui est relié à l'élément de liaison (13) et dont l'écartement à la plaque de base (7) se modifie lors du déplacement de l'élément de liaison (13).

2. Gril selon la revendication 1, **caractérisé en ce que** l'élément de liaison (13) est conçu comme un levier pivotant, lors du pivotement duquel l'écartement entre la plaque de base et la plaque chauffante (7, 9) se modifie.

3. Gril selon la revendication 1 ou 2, **caractérisé en ce que** l'élément de liaison (13) est relié à une première extrémité avec un premier point d'articulation (15c) à la plaque chauffante (9) et à une deuxième extrémité ou dans une section médiane avec un deuxième point d'articulation (15b) à la plaque de base (7).

4. Gril selon l'une des revendications précédentes, **caractérisé en ce que** la plaque de base (7) et la plaque chauffante (9) et, facultativement, le pied de l'appareil (5) notamment sont essentiellement circulaires ou elliptiques en vue de dessus, et **en ce que** l'élément de liaison (13) est disposé à leur périphérie extérieure.

5. Gril selon l'une des revendications précédentes, **caractérisé en ce que** l'élément de liaison (13) présente une caractéristique de ressort, à l'aide de laquelle l'élément de liaison (13) exerce une force élastique sur la plaque chauffante (9), la plaque de base (7) et/ou le pied de l'appareil (5), qui favorise un transfert du gril (1) de l'état de stockage à l'état d'utilisation.

6. Gril selon la revendication 5, **caractérisé en ce que** l'élément de liaison (13) est conçu comme un élément de ressort à lames.

7. Gril selon l'une des revendications précédentes, **caractérisé en ce que** sur le gril est conçu un dispositif de suspension (19) pour le suspendre au mur.

8. Gril selon l'une des revendications précédentes, **caractérisé en ce qu'**un moyen d'arrêt destiné à bloquer la plaque de base (7) par rapport à la plaque chauffante (9) et, facultativement, au pied de l'appareil (5) est associé à l'élément de liaison(13) au moins dans une position prédéterminée, en particulier dans l'état de stockage.

9. Gril selon l'une des revendications précédentes, **caractérisé en ce que** pour actionner la plaque chauffante (9), un organe de commande (11) est conçu sur le gril, notamment sur son pied (5), et **en ce que** la position de l'organe de commande (11) reste stationnaire lors d'une modification de l'écartement entre la plaque de base et la plaque chauffante (7, 9).

10. Gril selon la revendication 9, **caractérisé en ce que** l'organe de commande (11) restant stationnaire est relié à la plaque chauffante (9) par un câble d'alimentation électrique (33), et **en ce que** le câble d'alimentation électrique (33) admet une modification d'écartement entre l'organe de commande (11) et la plaque chauffante (9), qui a lieu lors du déplacement entre l'état d'utilisation et l'état de stockage.

11. Gril selon la revendication 10, **caractérisé en ce que** le câble d'alimentation électrique (33) passe à l'intérieur du gril.

12. Gril selon l'une des revendications 10 ou 11, **caractérisé en ce qu'**une ouverture de passage (35) est conçue dans la plaque de base (7), par laquelle le câble d'alimentation électrique (33) de la plaque chauffante (9) est guidé dans un espace intermédiaire (36) en dessous de la plaque de base (5) jusqu'à l'organe de commande (11).

13. Gril selon la revendication 12, **caractérisé en ce que** l'ouverture de passage (35) est conçue à l'extérieur d'une surface de pose destinée à poser les coupelles pour produit à griller (3) dans la plaque de base.

14. Dispositif de gril comprenant un gril (1) selon l'une des revendications précédentes et une pluralité de coupelles pour produit à griller (3), lesquelles présentent des poignées (21) rabattables (23) ou pivotantes et pouvant s'enclencher au moins dans un état de rabat resp. de pivot.
